# EUROPEAN PATENT SPECIFICATION

(11) **EP 3 151 512 B1**
(45) Date of publication and mention of the grant of the patent: **31.10.2018**
(21) Application number: 14893300.5
(22) Date of filing: 16.09.2014
(51) Int. Cl.: H04L 29/08, G06F 9/445

(54) **SERVICE AUTHENTICATION PROCESSING METHOD AND APPARATUS**
VERFAHREN UND VORRICHTUNG ZUR VERARBEITUNG EINER DIENSTAUTHENTIFIZIERUNG
PROCÉDÉ ET APPAREIL DE TRAITEMENT D'AUTHENTIFICATION DE SERVICE

(30) Priority: 28.05.2014 CN 201410231208
(43) Date of publication of application: 05.04.2017
(73) Proprietor: ZTE Corporation, Shenzhen, Guangdong 518057 (CN)
(72) Inventor: TANG, Chen, Shenzhen Guangdong 518057 (CN)
(74) Representative: Schröer, Gernot H.
(86) International application number: PCT/CN2014/086666
(87) International publication number: WO 2015/180298

(56) References cited:
- EP-A1- 1 657 645
- EP-A1- 2 658 207
- CN-A- 102 739 623
- CN-A- 103 546 290
- GB-A- 2 436 954
- US-A1- 2005 091 349
- US-B1- 6 282 712

## Description

### Technical Field

The present invention relates to the field of communication, and in particular to a service authentication processing method and apparatus.

### Background

With the continuous evolution of the IT technology, the infrastructure aspect also brings forth the new through the old. With the continuous mature development of the virtualization technology, the cloud computing has also entered a new stage. The cloud computing is the development and commercial implementation of the concepts, such as, distributed processing, parallel computing and grid computing, etc., its technical essence lies in the virtualization of the IT software and hardware resources, such as, computing, storage, server and application software, etc., and the cloud computing has its own unique technology in the aspects, such as, virtualization, data storage, data management, programming mode, etc.

The desktop virtual machine, that is, the server virtualization, is an important cornerstone of the underlying architecture of the cloud computing. In the process of the server virtualization, the virtualized software needs to realize the functions, such as, hardware abstraction, resource allocation, scheduling and management, isolation between the virtual machine and the host operating system and isolation among multiple virtual machines, etc., and the typical realization (which basically becomes a factual standard) can include but not limited to: Citrix Xen, VMware ESX Server, Microsoft Hype-V.

The virtual desktop of the cloud computing is to use and highlight the advantages of the desktop and meanwhile to create a new Web application development and releasing platform based on the cloud computing. The virtual desktop, that is, the Web desktop, can run on a browser, which can integrate Web applications, Web services, C\S applications, C\S application servers, and local clients to a desktop environment. The virtual desktop of the cloud computing is to use and highlight the advantages of the desktop and meanwhile to create a new Web application development and releasing platform based on the cloud computing.

At present, in the application process of the virtual desktop, there are various types of brands and models of the thin terminals. The operating systems installed on the thin terminals by various manufacturers are also different. At present, the main products sold on the market can include: windows XP, win7, XPE, WES7, Linux, Ubuntu, Android and other operating systems. Different operating systems have different installation strategies and limitations for the application software. If the installation, deployment and debugging of the desktop client are performed on all brands and models, the work is complicated and there is a huge workload; a large number of repeated work will further lead to the installation package transmission errors and insufficient space and other factors, which thus result in that the client installation is abnormal, and then also bring great difficulty to the troubleshooting. There are two main following problems existing in deploying the desktop client by the thin terminal currently:
on the one hand, when deploying the desktop client on the thin terminal, the desktop client is manually installed in one terminal by one terminal, while only a small part of the manufacturers can achieve issuing uniformly in the background, but its defect is that: it is a lack of a method of uniformly issuing and silent installation for terminals of all types of operating systems;
on the other hand, in a part of cloud desktop scenarios, the right control to the user is more strict, only the user right is open on the thin terminal, and the thin terminal runs by using the non-system administrator right, such as a user account, etc., which is easily to lead to be limited by the thin terminal operating system either if the user manually installs the desktop client or if the background issues it uniformly; especially for the operating system for which the user right control is strict, such as, win 7, etc., it even will be rejected to install the software under the user right, thus eventually leading to the installation failure.

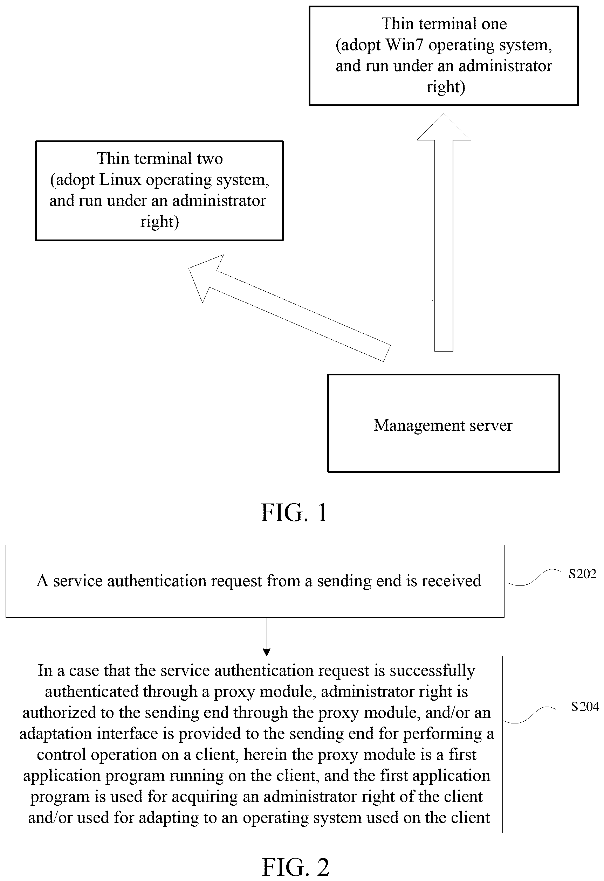

FIG. 1 is a deployment diagram of manually deploying a cloud desktop client according to the existing technology. As shown in FIG. 1, the user performs automatic installation through the desktop client program issued by the management platform, and the thin terminal must be run under the operating system administrator right. In addition, for the thin terminals of different types of operating systems, the management server must provide different strategies for issuing and installing the client software, which results in that the processing procedure of the management server is very cumbersome. Thus, in the above process, it is just because the thin terminal side is required to be with the development administrator right and the management platform side needs to adapt all types of operating systems, and thus it leads to that the whole process is extremely complex, and excessive manpower, material and financial resources are wasted.

The document GB 2436954 A discloses a system and method for automatically installing an operating system from a deployment server to a target server utilizing a directory service, the directory service utilizes target objects and policy objects to authenticate the identity of a particular target system and then to direct the target system to a deployment server that maintains a validated image of a desired operating system in a repository, the target system then communicates with the deployment server in order to install the appropriate operating system, the system is said to reduce the time and effort involved in loading operating systems, and to ensure that the proper licensed software is sent to appropriate systems.

The document EP 2658207A1 discloses an authorization method and a terminal device, the authorization method includes: receiving, by a terminal device, a right application request from a control device having no access right; notifying, by the terminal device, a control device having an administrator right to assign a right to the control device having no access right; receiving, by the terminal device, a right assignment command from the control device having an administrator right and assigning a right to the control device having no access right, with the embodiments of the present invention, a control device having no access right applies for a right proactively to obtain authorization for performing a management operation to be performed on a terminal device, thereby facilitating an operation of a user.

### Summary of the Invention

The embodiment of the present invention provides a service authentication processing method and apparatus according to appended independent claims, to at least solve the problem that the operation to the cloud desktop run on the client is limited without the administrator right or the complexity for performing the control operation to the cloud desktop will be increased due to the differences of the operating system types in the existing technology. Further improvements and embodiments are provided in the dependent claims.

Also provided is a service authentication processing method. According to an embodiment of the present invention, a service authentication processing method is provided, including: receiving a service authentication request from a sending end; and in a case that the service authentication request is successfully authenticated through a proxy module, authorizing an administrator right to the sending end through the proxy module, and/or providing an adaptation interface for performing a control operation on a client to the sending end, herein the proxy module is a first application program running on the client, and the first application program is used for acquiring an administrator right of the client and/or used for adapting to an operating system used on the client.

Alternatively, after authorizing the administrator right to the sending end through the proxy module, the method further includes: receiving an installation package of a second application program from the sending end, herein, the client is currently running under a normal user right; and in a case of determining that the sending end has the administrator right, installing the second application program by adopting the installation package.

Alternatively, after authorizing the administrator right to the sending end through the proxy module, the method further includes: receiving an upgrade package of a second application program from the sending end, herein, the client is currently running under a normal user right; and in a case of determining that the sending end has the administrator right and the second application program is already installed currently, updating the second application program by adopting the upgrade package.

Alternatively, after authorizing the administrator right to the sending end through the proxy module, the method further includes: receiving a request to uninstall a second application program from the sending end, herein, the client is currently running under a normal user right; and in a case of determining that the sending end has the administrator right and the second application program is already installed currently, uninstalling the second application program according to the request.

Alternatively, after providing the adaption interface to the sending end, the method further includes: receiving a configuration operation instruction from the sending end through the proxy module; and performing a configuration operation corresponding to the configuration operation instruction according to the configuration operation instruction.

Also provided is a service authentication processing apparatus.

A service authentication processing apparatus according to an embodiment of the present invention includes: a first receiving module, arranged to: receive a service authentication request from a sending end; and a processing module, arranged to: in a case that the service authentication request is successfully authenticated through a proxy module, authorize an administrator right to the sending end through the proxy module, and/or provide an adaptation interface to the sending end for performing a control operation on a client, herein the proxy module is a first application program running on the client, and the first application program is used for acquiring an administrator right of the client and/or used for adapting to an operating system used on the client.

Alternatively, the above apparatus further includes: a second receiving module, arranged to: receive an installation package of a second application program from the sending end, herein, the client is currently running under a normal user right; and an installation module, arranged to: in a case of determining that the sending end has the administrator right, install the second application program by adopting the installation package.

Alternatively, the above apparatus further includes: a third receiving module, arranged to: receive an upgrade package of a second application program from the sending end, wherein, the client is currently running under a normal user right; and an upgrade module, arranged to: in a case of determining that the sending end has the administrator right and the second application program is already installed currently, upgrade the second application program by adopting the upgrade package.

Alternatively, the above apparatus further includes: a fourth receiving module, arranged to: receive a request to uninstall a second application program from the sending end, herein, the client is currently running under a normal user right; and an uninstallation module, arranged to: in a case of determining that the sending end has the administrator right and the second application program is already installed currently, uninstall the second application program according to the request.

Alternatively, the above apparatus further includes: a fifth receiving module, arranged to: receive a configuration operation instruction from the sending end through the proxy module; and an execution module, arranged to: perform a configuration operation corresponding to the configuration operation instruction according to the configuration operation instruction.

Through the embodiment of the present invention, a received service authentication request from a sending end is adopted; and in a case that the service authentication request is successfully authenticated through a proxy module, an administrator right is authorized to the sending end through the proxy module, and/or an adaptation interface for performing a control operation on a client is provided to the sending end, herein the proxy module is a first application program running on the client, and the first application program is used for acquiring an administrator right of the client and/or used for adapting to an operating system used on the client. It solves at least the problem that the operation to the cloud desktop run on the client is limited without the administrator right or the complexity of performing the control operation to the cloud desktop will be increased due to the differences of the operating system types in the existing technology. Thus, the workload of maintenance personnel is reduced, the error probability of manual operation is reduced, and the operation and maintenance efficiency is improved.

### Brief Description of Drawings

The accompanying drawings described herein are used to provide further understanding for the present invention and constitute a part of the present application. The illustrated embodiments of the present invention and the description thereof are used to explain the present invention, rather than constituting an inappropriate limitation to the present invention. In the drawings:
FIG. 1 is a deployment diagram of manually deploying a cloud desktop client according to the existing technology;
FIG. 2 is a flow chart of a service authentication processing method according to an embodiment of the present invention;
FIG. 3 is a diagram of deploying a cloud desktop client by a user through a proxy module according to an alternative embodiment of the present invention;
FIG. 4 is a structure block diagram of a service authentication processing apparatus according to an embodiment of the present invention; and
FIG. 5 is a structure block diagram of a service authentication processing apparatus according to an alternative embodiment of the present invention.

### Specific Embodiments

The present invention is described in detail with reference to the accompanying drawings and in combination with embodiments hereinafter. It should be illustrated that, in the case of not conflicting, the embodiments in the present application and features in these embodiments can be combined with each other.

FIG. 2 is a flow chart of a service authentication processing method according to an embodiment of the present invention. As shown in FIG. 2, the method can include the following processing steps.

In step S202: a service authentication request from a sending end is received.

In step S204: in a case that the service authentication request is successfully authenticated through a proxy module, an administrator right is authorized to the sending end through the proxy module, and/or an adaptation interface for performing a control operation on a client is provided to the sending end, herein the proxy module is a first application program running on the client, and the first application program is used for acquiring an administrator right of the client and/or used for adapting to an operating system used on the client.

The operation to the cloud desktop run on the client is limited in a case without the administrator right or the complexity of performing the control operation to the cloud desktop will be increased due to the differences of the operating system types in the existing technology. By using the method shown in FIG. 2, the sending end sends the service authentication request to the client installed with the proxy module, and the proxy module performs the service authentication to the sending end; if the authentication is successful, then the proxy module authorizes the administrator right of the client to the sending end, to enable the sending end with the system administrator right to perform the operation on the cloud desktop of the client and not be rejected by the client; in addition, the client can further adapts the operating system through the proxy module, so even in the situation that there are differences between the operating systems used by the sending end and the client, because the proxy module plays a role of adaptation, the differences between different types of operating systems can be shielded, in order to facilitate the sending to perform the control operation to the desktop cloud of the client. Thus, it solves at least the problem that the operation to the cloud desktop run on the client is limited without the administrator right or the complexity of performing the control operation to the cloud desktop will be increased due to the differences of the operating system types in the existing technology; and thus, the workload of maintenance personnel is reduced, the operation complexity of the cloud desktop of the client and the error probability of manual operation are reduced, and the operation and maintenance efficiency is improved.

In an alternative implementation process, the above client can be a thin terminal (that is, no need to load more applications, while a lot of calculations can be run on the background server through the network), and the above sending end is usually a management server, and can also be other terminals except the client where the proxy module is located.

Alternatively, in step S204, after the proxy module authorizes the administrator right to the sending end, the method further can include the following steps.

In step S1: an installation package of a second application program from the sending end is received, herein, the client is currently running under a normal user right.

In step S2: in a case of determining that the sending end has the administrator right, the second application program is installed by adopting the installation package.

In an alternative embodiment, the maintenance personnel pre-installs and deploys a proxy module of a desktop client in an image of the thin terminal, and then the image is used as a standard image to perform the refurbishment to all thin terminals. The proxy module is deployed by the maintenance personnel in a manual mode under the system administrator right, with a self-starting function, and the proxy module has capability to acquire the highest system inner core right. The user can automatically install the installation package of the desktop client program issued by the management server, and the thin terminal runs under the user right. The management server initiates the service authentication process, and obtains the system administrator right of the thin terminal after the successful authentication. Thus, even under the user right, the application program can also be installed to the thin terminal, rather than being rejected by the operating system.

Alternatively, in step S204, after the proxy module authorizes the administrator right to the sending end, the method further can include the following steps.

In step S3: an upgrade package of a second application program from the sending end is received, herein, the client is currently running under a normal user right.

In step S4: in a case of determining that the sending end has the administrator right and the second application program is already installed currently, the second application program is upgrade d by adopting the upgrade package.

In the alternative embodiment, the user can perform automatic upgrade through the upgrade package of the desktop client program issued by the management server, and the thin terminal runs under the user right. The management server initiates the service authentication process, and obtains the system administrator right of the thin terminal after the successful authentication. Thus, even under the user right, the application program already installed in the thin terminal can also be upgraded, rather than being rejected by the operating system.

Alternatively, in step S204, after the proxy module authorizes the administrator right to the sending end, the method further can include the following steps.

In step S5: a request to uninstall a second application program from the sending end is received, herein, the client is currently running under a normal user right.

In step S6: in a case of determining that the sending end has the administrator right and the second application program is already installed currently, the second application program is uninstalled according to the request.

In the alternative embodiment, the user can perform automatic uninstallation through the uninstallation instruction of the desktop client program issued by the management server, to "thin" the thin terminal, and the thin terminal runs under the user right. The management server initiates the service authentication process, and obtains the system administrator right of the thin terminal after the successful authentication. Thus, even under the user right, the application program already installed in the thin terminal can also be uninstalled, rather than being rejected by the operating system.

Alternatively, in step S204, after providing the adaptation interface to the sending end, the method further can include the following steps.

In step S7: a configuration operation instruction from the sending end is received through the proxy module.

In step S8: a configuration operation corresponding to the configuration operation instruction is executed according to the configuration operation instruction.

In the alternative embodiment, the proxy module also has the role of system support, which adapts the common thin terminal operating system, and opens a unified adaption interface for performing the configuration operation to the management server, (the operation may include: system parameter configuration, network parameter configuration, etc.). The management server only needs to interact with the proxy module, to send the configuration operation instruction to the proxy module. And because the proxy module already performs the adaption work to the operating system currently used by the thin terminal, shields the differences of the operation system types, thus, the corresponding configure operation can be performed directly to the thin terminal according to the configuration instruction issued by the management server. Thereby, the interface adaption work in the process of executing various operations between the background server and the thin terminal is greatly reduced, and the complexity of the management platform to uniformly deploy the cloud desktop client is reduced.

It needs to be explained that the configuration operation to the thin terminal by the above management server can be executed just after the proxy module only completes the adaption for the operating system currently used by the thin terminal; of course, it can be executed after the proxy module not only completes the adaption for the operating system currently used by the thin terminal, but also completes the service authentication to the management server.

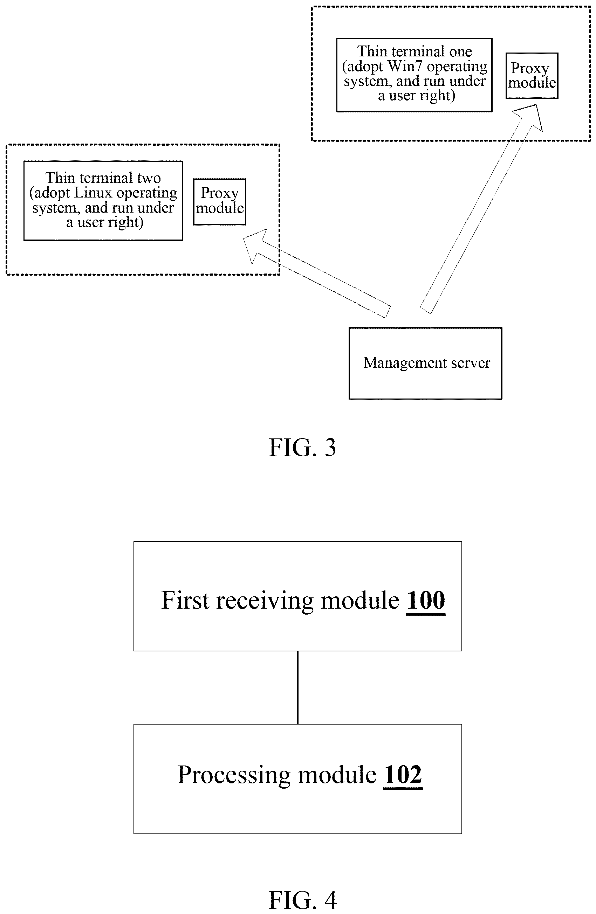

The above alternative implementation process is further described by combining with the alternative embodiment as shown in FIG. 3.

FIG. 3 is a diagram of deploying a cloud desktop client by a user through a proxy module according to an alternative embodiment of the present invention. As shown in FIG. 3, the user automatically installs the desktop client program issued by the management server, and the thin terminal runs under the user right. The management server initiates the service authentication process, and obtains the system administrator right of the thin terminal after the successful authentication. For the thin terminals with different types of operating systems, the management server does not need to perform adaption for all types of operating systems, while only needs to keep one set of interface for interaction between itself and the proxy module. Thus, it is able to achieve unified deployment of the desktop clients in a batch for the thin terminals with all types of operating systems, and especially for the automatic installation and deployment of the cloud desktop client under the non-system administrator account, and it also supports the manual single client installation by the user under the non-system administrator right.

The above method of deploying the desktop client through the proxy module mainly regards the proxy modules pre-deployed in various types of operating systems of the thin terminals as the bridge, even if the application software, runs on the non-system administrator right level, also can obtain the right of installing the software in the system through the proxy module, and the proxy module shields the operating system type of the thin terminal to the management server, which really realizes completing the automatic installation and deployment of the desktop client without manual intervention in various harsh conditions, thereby greatly simplifying the operation process, and improving the operation and maintenance efficiency of the thin terminal under the cloud desktop scenario.

FIG. 4 is a structure block diagram of a service authentication processing apparatus according to an embodiment of the present invention. As shown in FIG. 4, the service authentication processing apparatus can be applied to a thin terminal, and the service authentication processing apparatus can include: a first receiving module 100, arranged to: receive a service authentication request from a sending end; and a processing module 102, arranged to: in a case that the service authentication request is successfully authenticated through a proxy module, authorize an administrator right to the sending end through the proxy module, and/or provide an adaptation interface for performing a control operation on a client to the sending end, herein the proxy module is a first application program running on the client, and the first application program is used for acquiring an administrator right of the client and/or used for adapting to an operating system used on the client.

By adopting the apparatus as shown in FIG. 4, it solves at least the problem that the operation to the cloud desktop run on the client is limited without the administrator right or the complexity of performing the control operation to the cloud desktop will be increased due to the differences of the operating system types in the existing technology. Thus, the workload of maintenance personnel is reduced, the error probability of manual operation is reduced, and the operation and maintenance efficiency is improved.

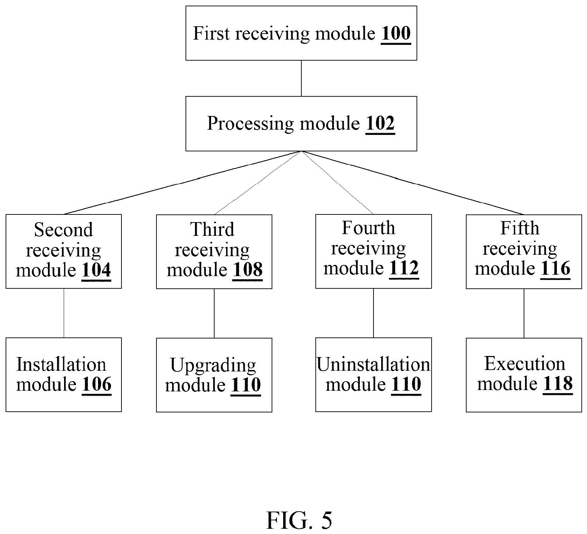

Alternatively, as shown in FIG. 5, the above apparatus further can include: a second receiving module 104, arranged to: receive an installation package of a second application program from the sending end, herein, the client is currently running under a normal user right; and an installation module 106, arranged to: in a case of determining that the sending end has the administrator right, install the second application program by adopting the installation package.

Alternatively, as shown in FIG. 5, the above apparatus further can include: a third receiving module 108, arranged to: receive an upgrade package of a second application program from the sending end, herein, the client is currently running under a normal user right; and an upgrade module 110, arranged to: in a case of determining that the sending end has the administrator right and the second application program is already installed currently, upgrade the second application program by adopting the upgrade u package.

Alternatively, as shown in FIG. 5, the above apparatus further can include: a fourth receiving module 112, arranged to: receive a request to uninstall a second application program from the sending end, herein, the client is currently running under a normal user right; and an uninstallation module 114, arranged to: in a case of determining that the sending end has the administrator right and the second application program is already installed currently, uninstall the second application program according to the request.

Alternatively, as shown in FIG. 5, the above apparatus further can include: a fifth receiving module 116, arranged to: receive a configuration operation instruction from the sending end through the proxy module; and an execution module 118, arranged to: perform a configuration operation corresponding to the configuration operation instruction according to the configuration operation instruction.

From the above description, it can be seen that the above embodiments achieve the following technical effects (it needs to be explained that these effects are the effects that some of the alternative embodiments can achieve): By adopting the method that the virtual desktop system issues the desktop client to the thin terminal in silence for automatic installation provided by the embodiment of the present invention, it can effectively avoid the occurrence of the situation the user fails to install the desktop client on the thin terminal due to limitation of the operating system right of the thin terminal under the scenario that the single desktop client is deployed by manually on the thin terminal in the virtual desktop environment, especially the thin terminal only opens the non-administrator account to the user. Thus, the automatic and centralized management of the desktop client on the thin terminal is realized in the cloud desktop system; even if the thin terminal opens only the non-system administrator right, it also can realize the unified and silent deployment of the desktop client, so as to effectively enhance the user awareness to the cloud desktop, greatly improve the operation and maintenance efficiency of the virtual desktop and reduce the probability of error caused by manually installing the client.

Obviously, it can be understood by those skilled in the art that each module or each step above-mentioned in the present invention can be implemented by the universal computing apparatus, and they can be integrated in a single computing apparatus, or distributed in the network made up by a plurality of computing apparatus. Alternatively, they can be implemented by the computing apparatus executable program codes. Accordingly, they can be stored in the storage apparatus and implemented by the computing apparatus, and in some situation, the shown or described steps can be executed according to a sequence different from herein, or they are made to each integrated circuit module respectively, or a plurality of modules or steps therein are made into the single integrated circuit module to be implemented. Thereby, the present invention is not limit to any specific form of the combination of the hardware and software.

The above description is only the alternative embodiments of the present invention and is not intended to limit the present invention. For those skilled in the art, the present invention can have various modifications and variations. All of modifications, equivalents and/or variations without departing from the scope of the appended claims should be embodied in the scope of the appending claims of the present invention.

### Industrial Applicability

As mentioned above, the service authentication processing method and apparatus provided by the embodiment of the present invention have the following beneficial effects: the automatic and centralized management for the desktop client on the thin terminal is realized in the cloud desktop system; even if the thin terminal only opens the non-system administrator right, it also can realize the unified and silent deployment of the desktop client, so as to effectively enhance the user awareness to the cloud desktop, greatly improve the operation and maintenance efficiency of the virtual desktop and reduce the probability of error caused by manually installing the client.

## Claims

1. A service authentication processing method, comprising:
receiving a service authentication request from a sending end (S202); and
in a case that the service authentication request is successfully authenticated through a proxy module, said method being **characterized by**:
authorizing an administrator right to the sending end through the proxy module, and/or providing an adaptation interface for performing a control operation on a client to the sending end, wherein, the proxy module is a first application program running on the client, and the first application program is used for acquiring, by the sending end, an administrator right of the client and/or used for adapting the sending end to an operating system used on the client (S204).

2. The method according to claim 1, wherein after authorizing the administrator right to the sending end through the proxy module, the method further comprises:
receiving an installation package of a second application program from the sending end, wherein, the client is currently running under a normal user right; and
in a case of determining that the sending end has the administrator right, adopting the installation package to install the second application program.

3. The method according to claim 1, wherein, after authorizing the administrator right to the sending end through the proxy module, the method further comprises:
receiving an upgrade package of a second application program from the sending end, wherein, the client is currently running under a normal user right; and
in a case of determining that the sending end has the administrator right and the second application program is already installed currently, updating the second application program by adopting the upgrade package.

4. The method according to claim 1, wherein, after authorizing the administrator right to the sending end through the proxy module, the method further comprises:
receiving a request of uninstalling a second application program from the sending end, wherein, the client is currently running under a normal user right; and
in a case of determining that the sending end has the administrator right and the second application program is already installed currently, uninstalling the second application program according to the request.

5. The method according to claim 1, wherein, after providing the adaption interface to the sending end, the method further comprises:
receiving a configuration operation instruction from the sending end through the proxy module; and
performing a configuration operation corresponding to the configuration operation instruction according to the configuration operation instruction.

6. A service authentication processing apparatus, comprising:
a first receiving module (100), arranged to: receive a service authentication request from a sending end; and
a processing module (102), arranged to: in a case that the service authentication request is successfully authenticated through a proxy module, authorize an administrator right to the sending end through the proxy module, and/or provide an adaptation interface for performing a control operation on a client to the sending end, wherein, the proxy module is a first application program running on the client, and the first application program is used for acquiring, by the sending end, an administrator right of the client and/or used for adapting the sending end to an operating system used on the client.

7. The apparatus according to claim 6, further comprising:
a second receiving module (104), arranged to: receive an installation package of a second application program from the sending end, wherein, the client is currently running under a normal user right; and
an installation module (106), arranged to: in a case of determining that the sending end has the administrator right, install the second application program by adopting the installation package.

8. The apparatus according to claim 6, further comprising:
a third receiving module (108), arranged to: receive an upgrade package of a second application program from the sending end, wherein, the client is currently running under a normal user right; and
an upgrade module (110), arranged to: in a case of determining that the sending end has the administrator right and the second application program is already installed currently, upgrade the second application program by adopting the upgrade package.

9. The apparatus according to claim 6, further comprising:
a fourth receiving module (112), arranged to: receive a request of uninstalling a second application program from the sending end, wherein, the client is currently running under a normal user right; and
an uninstallation module (114), arranged to: in a case of determining that the sending end has the administrator right and the second application program is already installed currently, uninstall the second application program according to the request.

10. The apparatus according to claim 6, further comprising:
a fifth receiving module (116), arranged to: receive a configuration operation instruction from the sending end through the proxy module; and
an execution module (118), arranged to: perform a configuration operation corresponding to the configuration operation instruction according to the configuration operation instruction.

## Patentansprüche

1. Dienstauthentifizierungsverarbeitungsverfahren, das umfasst:
Empfangen einer Dienstauthentifizierungsanfrage von einem Sendeende (S202); und
in einem Fall, in dem die Dienstauthentifizierungsanfrage durch ein Proxymodul erfolgreich authentifiziert wird, ist das Verfahren **gekennzeichnet durch**:
Authentifizieren eines Administratorrechts für das Sendeende durch das Proxymodul und/oder Bereitstellen einer Anpassungsschnittstelle zum Ausführen einer Steueroperation auf einem Client an das Sendeende, wobei das Proxymodul ein erstes Anwendungsprogramm ist, das auf dem Client läuft, und das erste Anwendungsprogramm verwendet wird zum Erlangen, durch das Sendeende, eines Administratorrechts des Clients und/oder verwendet wird zum Anpassen des Sendeendes an ein auf dem Client verwendetes Betriebssystem (S204).

2. Verfahren nach Anspruch 1, wobei nach dem Authentifizieren des Administratorrechts für das Sendeende durch das Proxymodul das Verfahren ferner umfasst:
Empfangen eines Installationspakets eines zweiten Anwendungsprogramms von dem Sendeende, wobei der Client gegenwärtig unter einem normalen Nutzerrecht läuft; und
bei Bestimmung, dass das Sendeende das Administratorrecht hat, Übernehmen des Installationspakets zur Installation des zweiten Anwendungsprogramms.

3. Verfahren nach Anspruch 1, wobei nach dem Authentifizieren des Administratorrechts an das Sendeende durch das Proxymodul das Verfahren ferner umfasst:
Empfangen eines Aktualisierungspakets eines zweiten Anwendungsprogramms von dem Sendeende, wobei der Client gegenwärtig unter einem normalen Nutzerrecht läuft; und
bei Bestimmung, dass das Sendeende das Administratorrecht hat und das zweite Anwendungsprogramm bereits gegenwärtig installiert ist, Aktualisieren des zweiten Anwendungsprogramms durch Übernahme des Aktualisierungspakets.

4. Verfahren nach Anspruch 1, wobei nach dem Authentifizieren des Administratorrechts für das Sendeende durch das Proxymodul das Verfahren ferner umfasst:
Empfangen einer Anfrage zur Deinstallation eines zweiten Anwendungsprogramms von dem Sendeende, wobei der Client gegenwärtig unter einem normalen Nutzerrecht läuft; und
bei Bestimmung, dass das Sendeende das Administratorrecht hat und das zweite Anwendungsprogramm bereits gegenwärtig installiert ist, Deinstallieren des zweiten Anwendungsprogramms gemäß der Anfrage.

5. Verfahren nach Anspruch 1, wobei nach Bereitstellung der Anpassungsschnittstelle für das Sendeende das Verfahren ferner umfasst:
Empfangen einer Konfigurationsoperationsanweisung von dem Sendeende durch das Proxymodul; und
Ausführen einer Konfigurationsoperation, die der Konfigurationsoperationsanweisung entspricht, gemäß der Konfigurationsoperationsanweisung.

6. Dienstauthentifizierungsverarbeitungsvorrichtung, die umfasst:
ein erstes Empfangsmodul (100), das vorgesehen ist zum: Empfangen einer Dienstauthentifizierungsanfrage von einem Sendeende; und
ein Verarbeitungsmodul (102), das vorgesehen ist zum:
in einem Fall, in dem die Dienstauthentifizierungsanfrage erfolgreich durch ein Proxymodul authentifiziert wird, Authentifizieren eines Administratorrechts für das Sendeende durch das Proxymodul und/oder Bereitstellen einer Anpassungsschnittstelle zum Ausführen einer Steueroperation auf einem Client an das Sendeende, wobei das Proxymodul ein erstes Anwendungsprogramm ist, das auf dem Client läuft, und das erste Anwendungsprogramm verwendet wird zum Erlangen, durch das Sendeende, eines Administratorrechts des Clients und/oder verwendet wird zum Anpassen des Sendeendes an ein auf dem Client verwendetes Betriebssystem.

7. Vorrichtung nach Anspruch 6, die ferner umfasst:
ein zweites Empfangsmodul (104), das vorgesehen ist zum: Empfangen eines Installationspakets eines zweiten Anwendungsprogramms von dem Senderende, wobei der Client derzeit unter einem normalen Nutzerrecht läuft; und
ein Installationsmodul (106), das vorgesehen ist zum: bei Bestimmung, dass das Sendeende das Administratorrecht hat, Installieren des zweiten Anwendungsprogramms durch Übernahme des Installationsprogramms.

8. Vorrichtung nach Anspruch 6, die ferner umfasst:
ein drittes Empfangsmodul (108), das vorgesehen ist zum: Empfangen eines Aktualisierungspakets eines zweiten Anwendungsprogramms von dem Sendeende, wobei der Client gegenwärtig unter einem normalen Nutzerrecht läuft; und
ein Aktualisierungsmodul (110), das vorgesehen ist zum: bei Bestimmung, dass das Sendeende das Administratorrecht hat und das zweite Anwendungsprogramm bereits gegenwärtig installiert ist, Aktualisieren des zweiten Anwendungsprogramms durch Übernehmen des Aktualisierungspakets.

9. Vorrichtung nach Anspruch 6, die ferner umfasst:
ein viertes Empfangsmodul (112), das vorgesehen ist zum: Empfangen einer Anfrage zur Deinstallation eines zweiten Anwendungsprogramms von dem Sendeende, wobei der Client gegenwärtig unter einem normalen Nutzerrecht läuft; und
ein Deinstallationsmodul (114), das vorgesehen ist zum:
bei Bestimmung, dass das Sendeende das Administratorrecht hat und das zweite Anwendungsprogramm bereits gegenwärtig installiert ist, Deinstallieren des zweiten Anwendungsprogramms gemäß der Anfrage.

10. Vorrichtung nach Anspruch 6, die ferner umfasst:
ein fünftes Empfangsmodul (116), das vorgesehen ist zum: Empfangen einer Konfigurationsoperationsanweisung von dem Sendeende durch das Proxymodul; und
ein Ausführungsmodul (118), das vorgesehen ist zum: Ausführen einer Konfigurationsoperation, die der Konfigurationsoperationsanweisung entspricht, gemäß der Konfigurationsoperationsanweisung.

## Revendications

1. Procédé de traitement d'authentification de service, comprenant:
recevoir une requête d'authentification de service à partir d'une extrémité d'envoi (S202); et
dans le cas dans lequel la requête d'authentification de service est authentifiée avec succès par l'intermédiaire d'un module de mandataire, ledit procédé étant **caractérisé par**:
autoriser un droit d'administrateur vis-à-vis de l'extrémité d'envoi par l'intermédiaire du module de mandataire, et/ou fournir une interface d'adaptation pour réaliser une opération de commande sur un client à l'extrémité d'envoi, le module de mandataire étant un premier programme d'application s'exécutant sur le client, et le premier programme d'application étant utilisé pour acquérir, par l'extrémité d'envoi, un droit d'administrateur du client et/ou utilisé pour adapter l'extrémité d'envoi à un système d'exploitation utilisé sur le client (S204).

2. Procédé selon la revendication 1, dans lequel, après l'autorisation du droit d'administrateur vis-à-vis de l'extrémité d'envoi par l'intermédiaire du module de mandataire, le procédé comprend en outre:
recevoir un progiciel d'installation d'un second programme d'application à partir de l'extrémité d'envoi, le client s'exécutant actuellement sous un droit d'utilisateur normal; et
dans un cas de détermination du fait que l'extrémité d'envoi a le droit d'administrateur, utiliser le progiciel d'installation pour installer le second programme d'application.

3. Procédé selon la revendication 1, dans lequel, après l'autorisation du droit d'administrateur vis-à-vis de l'extrémité d'envoi par l'intermédiaire du module de mandataire, le procédé comprend en outre:
recevoir un progiciel de mise à niveau d'un second programme d'application à partir de l'extrémité d'envoi, le client s'exécutant actuellement sous un droit d'utilisateur normal; et
dans un cas de détermination du fait que l'extrémité d'envoi a le droit d'administrateur et que le second programme d'application est déjà installé actuellement, mettre à jour le second programme d'application par utilisation du progiciel de mise à niveau.

4. Procédé selon la revendication 1, dans lequel, après l'autorisation du droit d'administrateur vis-à-vis de l'extrémité d'envoi par l'intermédiaire du module de mandataire, le procédé comprend en outre:
recevoir une requête de désinstallation d'un second programme d'application à partir de l'extrémité d'envoi, le client s'exécutant actuellement sous un droit d'utilisateur normal; et
dans un cas de détermination du fait que l'extrémité d'envoi a le droit d'administrateur et que le second programme d'application est déjà installé actuellement, désinstaller le second programme d'application selon la requête.

5. Procédé selon la revendication 1, dans lequel, après la fourniture de l'interface d'adaptation à l'extrémité d'envoi, le procédé comprend en outre:
recevoir une instruction d'opération de configuration à partir de l'extrémité d'envoi par l'intermédiaire du module de mandataire; et
réaliser une opération de configuration correspondant à l'instruction d'opération de configuration selon l'instruction d'opération de configuration.

6. Appareil de traitement d'authentification de service, comprenant:
un premier module de réception (100), conçu pour: recevoir une requête d'authentification de service à partir d'une extrémité d'envoi; et
un module de traitement (102), conçu pour: dans un cas dans lequel la requête d'authentification de service est authentifiée avec succès par l'intermédiaire d'un module de mandataire, autoriser un droit d'administrateur vis-à-vis de l'extrémité d'envoi par l'intermédiaire du module de mandataire, et/ou fournir une interface d'adaptation pour réaliser une opération de commande sur un client à l'extrémité d'envoi, le module de mandataire étant un premier programme d'application s'exécutant sur le client, et le premier programme d'application étant utilisé pour acquérir, par l'extrémité d'envoi, un droit d'administrateur du client et/ou utilisé pour adapter l'extrémité d'envoi à un système d'exploitation utilisé sur le client.

7. Appareil selon la revendication 6, comprenant en outre:
un second module de réception (104), conçu pour: recevoir un progiciel d'installation d'un second programme d'application à partir de l'extrémité d'envoi, le client s'exécutant actuellement sous un droit d'utilisateur normal; et
un module d'installation (106), conçu pour: dans un cas de détermination du fait que l'extrémité d'envoi a le droit d'administrateur, installer le second programme d'application par utilisation du progiciel d'installation.

8. Appareil selon la revendication 6, comprenant en outre:
un troisième module de réception (108), conçu pour: recevoir un progiciel de mise à niveau d'un second programme d'application à partir de l'extrémité d'envoi, le client s'exécutant actuellement sous un droit d'utilisateur normal; et
un module de mise à niveau (110), conçu pour: dans un cas de détermination du fait que l'extrémité d'envoi a le droit d'administrateur et que le second programme d'application est déjà installé actuellement, mettre à niveau le second programme d'application par utilisation du progiciel de mise à niveau.

9. Appareil selon la revendication 6, comprenant en outre:
un quatrième module de réception (112), conçu pour:
recevoir une requête de désinstallation d'un second programme d'application à partir de l'extrémité d'envoi, le client s'exécutant actuellement sous un droit d'utilisateur normal; et
un module de désinstallation (114), conçu pour: dans un cas de détermination du fait que l'extrémité d'envoi a le droit d'administrateur et que le second programme d'application est déjà installé actuellement, désinstaller le second programme d'application selon la requête.

10. Appareil selon la revendication 6, comprenant en outre:
un cinquième module de réception (116), conçu pour: recevoir une instruction d'opération de configuration à partir de l'extrémité d'envoi par l'intermédiaire du module de mandataire; et
un module d'exécution (118), conçu pour: réaliser une opération de configuration correspondant à l'instruction d'opération de configuration selon l'instruction d'opération de configuration.
